# EUROPÄISCHE PATENTSCHRIFT

(11) **EP 3 702 136 B1**
(45) Veröffentlichungstag und Bekanntmachung des Hinweises auf die Patenterteilung: **12.07.2023**
(21) Anmeldenummer: 20153980.6
(22) Anmeldetag: 28.01.2020
(51) Int. Cl.: B29C 65/18, B29C 65/30, B65B 7/16, B65B 51/14, B65B 59/04

(54) **VERFAHREN ZUM BETREIBEN EINER VERPACKUNGSMASCHINE**
METHOD FOR OPERATING A PACKAGING MACHINE
PROCÉDÉ DE PILOTAGE D'UNE MACHINE D'EMBALLAGE

(30) Priorität: 28.02.2019 DE 102019202755
(43) Veröffentlichungstag der Anmeldung: 02.09.2020
(73) Patentinhaber: MULTIVAC Sepp Haggenmüller SE & Co. KG, 87787 Wolfertschwenden (DE)
(72) Erfinder: BUCHBERGER, Peter, 87448 Waltenhofen (DE); PFALZER, Thomas, 87763 Lautrach (DE)
(74) Vertreter: Grünecker Patent- und Rechtsanwälte PartG mbB

(56) Entgegenhaltungen:
- WO-A1-2009/144446
- DE-A1-102016 125 132
- US-A1- 2013 248 107

## Beschreibung

Die Erfindung betrifft das Gebiet der Verpackungsmaschinen zum Verpacken von Produkten.

Bekannte Verpackungsmaschinen, wie beispielsweise Tiefziehverpackungsmaschinen oder Schalenverschließmaschinen, umfassen Arbeitsstationen zum Durchführen von Bearbeitungsschritten zum Herstellen einer Produktverpackung. Beispielsweise kann eine Siegelstation vorgesehen sein, die befüllte Verpackungsschalen oder befüllte, in einer Unterfolienbahn tiefgezogene Verpackungsmulden durch Ansiegeln einer Deckfolie verschließt. Die Siegelstation kann ein beheizbares Siegelwerkzeug zum Ansiegeln der Deckfolie mittels Wärme- und Druckeinwirkung umfassen. Ein weiteres Beispiel für eine Arbeitsstation einer Verpackungsmaschine ist eine Formstation, die zu befüllende Verpackungsmulden in einer Unterfolienbahn durch Tiefziehen ausbildet.

Zum Beheizen eines Werkzeugs einer Arbeitsstation können Heizelemente, beispielsweise in Form einer Widerstandsheizung, in das jeweilige Werkzeug integriert sein. Um im Betrieb die Temperatur des Werkzeugs in einem geeigneten Bereich zu halten, kann zudem ein Temperatursensor in dem Werkzeug vorgesehen sein, basierend auf dessen Sensorausgabe die Heizelemente gemäß einem Regelschema betrieben werden. Es ist aus der Praxis bekannt, dass die Regelung der Heizelemente von einer zentralen Maschinensteuerung der Verpackungsmaschine durchgeführt wird. Entsprechende Schaltelemente zum geeigneten Versorgen der Heizelemente mit elektrischem Strom, wie beispielsweise Relais, können in einem Schaltschrank der Verpackungsmaschine vorgesehen sein.

Aus der DE 10 2016 125 132 A1 ist es bekannt, an den einzelnen Arbeitsstationen, wie beispielsweise einer Siegelstation oder einer Formstation, einer Verpackungsmaschine jeweils eine Busknotenanordnung vorzusehen, in die Elektronik ausgelagert wird, die sich bei herkömmlichen Maschinen in dem zentralen Schaltschrank befunden hätte. Somit soll der Platzbedarf im zentralen Schaltschrank verringert werden. Die Busknotenanordnung ist auf einer Außenseite der Wand der Arbeitsstation angeordnet, um zu Wartungszwecken leicht zugänglich zu sein. Auf einer Platine der Busknotenanordnung sollen u.a. elektrische oder elektronische Steuerelemente zur Ansteuerung eines Heizelements eines Werkzeugs der Arbeitsstation vorgesehen sein. Beim Einbau des Werkzeugs in die Arbeitsstation wird ein Anschluss des Werkzeugs, über den beispielsweise die Heizelemente mit elektrischem Strom versorgt werden, mit einem Anschluss der Busknotenanordnung verbunden.

Die DE 10 2016 117 834 A1 beschreibt ein mit Heizleitern beheizbares Siegelorgan für die Herstellung von Verpackungen aus thermoplastischen Materialien wie Kunststofffolien. Das Siegelorgan umfasst ein Gehäuse, das zur Anbringung an einer Verpackungsmaschine ausgebildet ist. Im Inneren des Gehäuses soll eine Steuerungselektronik und/oder eine Leistungselektronik angeordnet sein, so dass das Siegelorgan autark einsetzbar ist, die Verpackungsmaschine selbst also die Steuerung oder Regelung des Siegelorgans nicht bewirken muss, weil dies von dem Siegelorgan selbst bewerkstelligt wird. Über die Verpackungsmaschine muss nur noch die allgemeine Energieversorgung und gegebenenfalls die Definition bestimmter für den Siegelvorgang benötigter Sollgrößen, wie beispielsweise die Solltemperatur, zur Verfügung gestellt werden.

Nachteilig beim Betrieb bekannter Verpackungsmaschinen ist, dass bei Produktionsbeginn zunächst eine Aufheizzeit der beheizbaren Werkzeuge in den Arbeitsstationen abgewartet werden muss. Besonders ungünstig ist eine solche Verzögerung bei einer Wiederaufnahme der Produktion nach einem Werkzeugwechsel. Das Aufheizen des neu eingesetzten Werkzeugs in der entsprechenden Arbeitsstation kann durchaus einige Zeit in Anspruch nehmen und die Wiederaufnahme der Produktion so verzögern.

Die WO 2009/144446 A1 beschreibt eine Siegeleinheit zum Ansiegeln von Kunststoffdeckeln an Behälter. Die Siegeleinheit kann in einem Siegelsystem auf und ab bewegt werden, um mit beheizten Siegelköpfen der Siegeleinheit Kunststoffdeckel an Behältern anzusiegeln. In der Siegeleinheit ist ein Kommunikationsinterface vorgesehen, welches mit den Siegelköpfen verbunden ist. Das Kommunikationsinterface ist über eine verkabelte Verbindung oder drahtlos mit einer externen Steuereinheit verbunden. Außerdem sind an den Siegelköpfen vorgesehene Temperatursensoren mit dem Kommunikationsinterface verbunden. Eine Kommunikation zwischen den Siegelköpfen und den Temperatursensoren und der externen Steuereinheit erfolgt über das Kommunikationsinterface. Die externe Steuereinheit regelt die Temperatur der Siegelköpfe. Es ist auch eine Vorheizphase beschrieben, in der die externe Steuerungseinheit ein Heizen der Siegelköpfe veranlasst, während die Siegeleinheit nicht an einer Siegelmaschine angebracht ist.

Es ist Aufgabe der Erfindung, ein Verfahren zum Betreiben einer Verpackungsmaschine bereitzustellen, welches mit möglichst einfachen Mitteln eine möglichst schnelle Wiederaufnahme der Produktion nach einem Werkzeugwechsel erlaubt.

Diese Aufgabe wird durch den Gegenstand von Anspruch 1 gelöst. Die abhängigen Ansprüche geben vorteilhafte Ausführungsformen der Erfindung an.

Die Erfindung gibt ein Verfahren zum Betreiben einer Verpackungsmaschine an, die eine Arbeitsstation mit einem auswechselbaren Werkzeug umfasst. In das Werkzeug ist eine Regelungseinrichtung integriert. Wenn das Werkzeug in die Arbeitsstation eingebaut ist, regelt die Regelungseinrichtung durch geeignetes Versorgen einer in das Werkzeug integrierten Heizeinrichtung mit elektrischer Leistung eine Temperatur des Werkzeugs anhand einer Betriebstemperartur-Sollvorgabe. Wenn das Werkzeug in einem aus der Arbeitsstation ausgebauten Zustand an eine externe Stromversorgung angeschlossen wird, regelt die in das Werkzeug integrierte Regelungseinrichtung die Temperatur des Werkzeugs anhand einer Vorheiztemperatur-Sollvorgabe durch geeignetes Versorgen der Heizeinrichtung mit von der externen Stromversorgung bereitgestellter elektrischer Leistung.

Die Erfindung erlaubt es, das Werkzeug zunächst in dem aus der Arbeitsstation ausgebauten Zustand durch Verbinden mit der externen Stromversorgung mittels der Regelung anhand der Vorheiztemperatur-Sollvorgabe vorzuheizen. Wenn anschließend das vorgeheizte Werkzeug in die Arbeitsstation eingebaut wird, kann optimalerweise direkt oder zumindest schneller als bei einem nicht vorgeheizten Werkzeug mit dem Verpackungsbetrieb begonnen werden, da die im Betrieb benötigte Werkzeugtemperatur bereits vorliegt oder zumindest schneller erreicht wird. Somit kann eine Verzögerung des Betriebsbeginns bei einem Neuanlaufen der Verpackungsmaschine oder bei einem Werkzeugwechsel vermieden oder verringert werden. Der Einbau des vorgeheizten Werkzeugs erfordert ein Hantieren mit dem heißen Werkzeug. Bei Vorsehen entsprechender Schutzmaßnahmen und geeigneter Auslegung des Werkzeugs sowie ausreichender Schulung des Personals ist eine sichere Handhabung des heißen Werkzeugs jedoch durchaus möglich.

Besonders vorteilhaft ist, dass sowohl die Regelung der Temperatur des Werkzeugs in der Arbeitsstation anhand der Betriebstemperatur-Sollvorgabe (im Verpackungsbetrieb der Verpackungsmaschine) als auch die Regelung der Temperatur des Werkzeugs im ausgebauten Zustand des Werkzeugs anhand der Vorheiztemperatur-Sollvorgabe durch die in das Werkzeug integrierte Regelungseinrichtung erfolgt. Es ist daher nicht erforderlich, zum Vorheizen des Werkzeugs außerhalb der Arbeitsstation ein Vorheizgerät mit einer eigenen Regelungseinrichtung vorzusehen. Vielmehr ist es ausreichend, wenn das Werkzeug in dem aus der Arbeitsstation ausgebauten Zustand einfach an eine externe Stromversorgung angeschlossen wird, die elektrische Leistung zum Betrieb der Heizeinrichtung und elektrische Leistung zum Betrieb der Regelungseinrichtung des Werkzeugs bereitstellt.

Da die Regelungseinrichtung in das Werkzeug selbst integriert ist, ist es zudem möglich, Werkzeuge, die unterschiedlich konfigurierte Regelungseinrichtungen erfordern, in derselben Arbeitsstation zu betreiben und an dieselbe externe Stromversorgung anzuschließen. Die Konfiguration der in das Werkzeug integrierten Regelungseinrichtung kann jeweils an die Eigenschaften des Werkzeugs angepasst sein, beispielsweise an die Anzahl, Dimensionierung und Positionierung der Heizeinrichtungen in dem Werkzeug.

Bei der Betriebstemperatur-Sollvorgabe und/oder der Vorheiztemperatur-Sollvorgabe kann es sich jeweils um Temperatur-Sollwerte handeln. Es wäre aber auch denkbar, die Temperatur des Werkzeugs jeweils nicht auf einen bestimmten Wert, sondern in einen bestimmten Bereich zu regeln. Die Betriebstemperatur-Sollvorgabe und/oder die Vorheiztemperatur-Sollvorgabe könnten also jeweils auch als Soll-Temperaturbereich ausgebildet sein.

Vorzugsweise stellt die externe Stromversorgung dem Werkzeug zwar elektrische Heizleistung, nicht aber Steuer- oder Regelungssignale zur Verfügung. Die Regelung des Vorheizens kann vollständig von der in das Werkzeug integrierten Regelungseinrichtung übernommen werden. Zusätzlich zu der elektrischen Heizleistung kann die externe Stromversorgung dem Werkzeug noch elektrische Leistung zum Betreiben der Regelungseinrichtung zur Verfügung stellen. Die externe Stromversorgung kann beispielsweise ein Stromkabel, mit oder ohne Netzteil, zum Anschluss an das Werkzeug und an eine Steckdose umfassen. Es wäre aber auch denkbar, dass das die externe Stromversorgung eine Dockingstation umfasst, in welche das Werkzeug einlegbar ist oder an welche das Werkzeug angedockt werden kann.

Gemäß einer bevorzugten Ausführungsform wird die Vorheiztemperatur-Sollvorgabe der Regelungseinrichtung von einer Maschinensteuerung der Verpackungsmaschine vorgegeben. Insbesondere kann die Maschinensteuerung der Verpackungsmaschine die Vorheiztemperatur-Sollvorgabe vor einem Ausbau des Werkzeugs aus der Arbeitsstation dem Werkzeug übermitteln. Wird das Werkzeug vor einem erneuten Einbau in die Arbeitsstation vorgeheizt, kann dies anhand des zuvor durch die Maschinensteuerung der Verpackungsmaschine übermittelten Vorheiztemperatur-Sollvorgabe erfolgen. So kann die Vorheiztemperatur-Sollvorgabe auf einfache Art und Weise an die Konfiguration der Verpackungsmaschine angepasst werden. Zudem ist es ohne großen Zusatzaufwand möglich, dass die Vorheiztemperatur-Sollvorgabe basierend auf einer Benutzereingabe an der Verpackungsmaschine über die Maschinensteuerung der Verpackungsmaschine an das Werkzeug vorgegeben wird.

Es wäre auch denkbar, dass die Vorheiztemperatur-Sollvorgabe der Regelungseinrichtung als voreingestellte Vorgabe vorliegt, insbesondere "ab Werk". Die Vorheiztemperatur-Sollvorgabe könnte gewissermaßen in dem Werkzeug selbst fest gespeichert sein. Es wären auch Kombinationen denkbar, derart, dass zunächst ein Standardwert für die Vorheiztemperatur-Sollvorgabe als voreingestellte Vorgabe vorliegt, diese aber von der Maschinensteuerung der Verpackungsmaschine im in die Arbeitsstation eingebauten Zustand des Werkzeugs geändert werden kann.

Vorzugsweise umfasst die Regelungseinrichtung einen Speicher, in welchem die Vorheiztemperatur-Sollvorgabe hinterlegt wird (beispielsweise als voreingestellte Vorgabe oder nach einer Übermittlung durch die Maschinensteuerung der Verpackungsmaschine).

Gemäß einer bevorzugten Ausführungsform wird die Regelungseinrichtung vor einem Ausbau des Werkzeugs aus der Arbeitsstation in einen Vorheizmodus versetzt, insbesondere durch die Maschinensteuerung der Verpackungsmaschine. Vorzugsweise erkennt die aus dem Werkzeugs ausgebaute Regelungseinrichtung nach dem Anschließen an die externe Stromversorgung, dass es sich in dem Vorheizmodus befindet und beginnt mit dem Regeln der Temperatur des Werkzeugs anhand der Vorheiztemperatur-Sollvorgabe. Wenn das Werkzeug wieder in die Arbeitsstation eingebaut wird, kann es durch die Maschinensteuerung der Verpackungsmaschine wieder aus dem Vorheizmodus und in einen Verpackungsbetriebsmodus versetzt werden, in dem es die Temperatur des Werkzeugs anhand der Betriebstemperatur-Sollvorgabe regelt. Vorzugsweise kann die Regelungseinrichtung bereits vor einem ersten Einbau in die Arbeitsstation (also gewissermaßen "ab Werk") in dem Vorheizmodus vorliegen

Es wäre denkbar, dass die Regelungseinrichtung nach dem Anschließen an die externe Stromversorgung erkennt, dass keine Kommunikationsverbindung mit einer Maschinensteuerung der Verpackungsmaschine vorliegt, und dann mit dem Regeln der Temperatur des Werkzeugs anhand der Vorheiztemperatur-Sollvorgabe beginnt. Der Vorheizmodus könnte also durch ein Erkennen eines Fehlens der Kommunikationsverbindung mit der Maschinensteuerung erkannt werden. Ein aktives Versetzen des Werkzeugs in den Vorheizmodus durch die Maschinensteuerung wäre dann nicht erforderlich. Wird das Werkzeug wieder in die Arbeitsstation eingebaut und eine Kommunikationsverbindung mit der Maschinensteuerung hergestellt, könnte die Regelungseinrichtung wieder auf ein Regeln der Temperatur des Werkzeugs anhand der Vorheiztemperatur-Sollvorgabe umschalten.

Die Betriebstemperatur-Sollvorgabe kann der Regelungseinrichtung von der Maschinensteuerung der Verpackungsmaschine vorgegeben werden. Da das Werkzeug jedoch selbst über die Regelungseinrichtung verfügt, sind seitens der Verpackungsmaschine außer einer Stromversorgung und optional einer Vorgabe der Betriebstemperatur-Sollvorgabe keine weiteren Vorgaben unbedingt erforderlich. Eine Vorgabe der Betriebstemperatur-Sollvorgabe durch die Maschinensteuerung der Verpackungsmaschine erlaubt ein Anpassen der Temperatur des Werkzeugs anhand der jeweiligen Betriebssituation der Verpackungsmaschine, gegebenenfalls auch im Betrieb. Alternativ wäre es aber auch denkbar, dass die Betriebstemperatur-Sollvorgabe bereits in der Regelungseinrichtung vorgespeichert ist.

In dem in die Arbeitsstation eingebauten Zustand des Werkzeugs kann die Regelungseinrichtung mit der Maschinensteuerung der Verpackungsmaschine in Kommunikationsverbindung stehen. Über diese Kommunikationsverbindung können beispielsweise die Vorheiztemperatur-Sollvorgabe und/oder die Betriebstemperatur-Sollvorgabe an die Regelungseinrichtung übermittelt werden. Es wäre aber auch denkbar, dass die Regelungseinrichtung oder andere in dem Werkzeug integrierte Einrichtungen Daten über die Kommunikationsverbindung an die Verpackungsmaschine senden. Beispielsweise wäre eine Übermittlung einer Werkzeugkennung denkbar. Die Kommunikationsverbindung zwischen der Regelungseinrichtung und der Maschinensteuerung der Verpackungsmaschine erfolgt vorzugsweise über ein Kommunikationsbus-System. Ein entsprechender Busknoten ist vorzugsweise in das Werkzeug integriert.

Prinzipiell kann es sich bei der Arbeitsstation um eine beliebige Arbeitsstation der Verpackungsmaschine handeln, die ein zu beheizendes Werkzeug umfasst. Bevorzugterweise ist die Arbeitsstation eine Siegelstation der Verpackungsmaschine und das Werkzeug ist ein beheizbares Siegelwerkzeug zum siegelnden Verschließen einer befüllten Verpackung, insbesondere durch Ansiegeln einer Deckfolie. Die Arbeitsstation könnte beispielsweise aber auch eine Formstation der Verpackungsmaschine sein und das Werkzeug könnte eine Heizplatte zum Beheizen einer Unterfolienbahn sein. Insbesondere könnte es sich bei dem Werkzeug um einen beheizbaren Formstempel handelt.

Bevorzugterweise wird die Erfindung auf eine Verpackungsmaschine angewandt, bei der es sich um eine Tiefziehverpackungsmaschine oder eine Schalenverschließmaschine handelt. Es wäre aber auch denkbar, die Erfindung auf andere Verpackungsmaschinen anzuwenden, beispielsweise auf eine Schlauchbeutelmaschine.

Vorzugsweise ist zumindest ein Temperatursensor in das Werkzeug integriert und die Regelungseinrichtung greift für das Regeln der Temperatur des Werkzeugs auf einen von dem Temperatursensor bereitgestellten Wert zurück. So lässt sich die Regelung der Temperatur des Werkzeugs besonders genau durchführen. Zudem sind alle für die Regelung erforderlichen Komponenten in dem Werkzeug integriert.

Der Temperatursensor und die Regelungseinrichtung können als gemeinsames Modul in die Heizeinrichtung integriert sein. Hierdurch reduziert sich der Herstellungsaufwand für das Werkzeug.

Im Folgenden soll die Erfindung anhand von Ausführungsbeispielen unter Bezugnahme auf die Figuren näher erläutert werden. Dabei zeigt
- Figur 1: eine schematische Seitenansicht einer Schalenverschließmaschine zur Durchführung des Verfahrens gemäß einer Ausführungsform;
- Figur 2: eine schematische Seitenansicht einer Tiefziehverpackungsmaschine zur Durchführung des Verfahrens gemäß einer Ausführungsform;
- Figur 3: eine schematische Schnittansicht durch eine Arbeitsstation mit eingebautem beheizbarem Werkzeug gemäß einer Ausführungsform, wobei es sich bei der Arbeitsstation um eine Siegelstation handelt;
- Figur 4: eine schematische Darstellung des Werkzeugs im in die Arbeitsstation eingebauten Zustand gemäß einer Ausführungsform als Blockschaltbild; und
- Figur 5: eine schematische Darstellung des Werkzeugs in einem aus der Arbeitsstation ausgebauten Zustand gemäß einer Ausführungsform als Blockschaltbild.

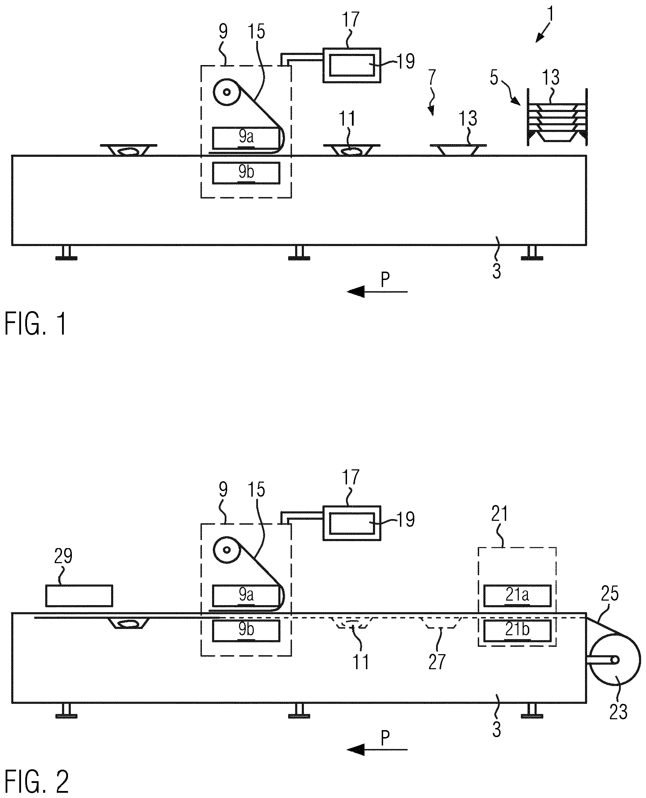

Die Erfindung betrifft ein Verfahren zum Betreiben einer Verpackungsmaschine 1. Gemäß einer in Figur 1 dargestellten beispielhaften Ausführungsform kann es sich bei der Verpackungsmaschine 1 um eine Schalenverschließmaschine handeln. Entlang einer Produktionsrichtung P sind an einem Maschinengestell 3 der Verpackungsmaschine 1 aus Figur 1 hintereinander eine Abstapelvorrichtung 5, eine Einlegestrecke 7 und eine Siegelstation 9 angeordnet. Die Abstapelvorrichtung 5 stapelt mit Produkten 11 zu befüllende Verpackungsschalen 13 auf eine in Figur 1 nicht dargestellte Fördereinrichtung ab. Die Verpackungsschalen 13 werden entlang der Produktionsrichtung P über eine Einlegestrecke 7 zu einer Siegelstation 9 gefördert. In der Einlegestrecke 7 werden die Verpackungsschalen 13 mit zu verpackenden Produkten 11 befüllt. In der Siegelstation 9 werden die befüllten Verpackungsschalen 13 anschließend durch Ansiegeln einer Deckfolie 15 verschlossen. Die Siegelstation 9 weist hierzu ein Siegelstationsoberteil 9a und ein Siegelstationsunterteil 9b auf, die relativ zueinander entlang einer vertikalen Richtung bewegt werden können, um zwischen ihnen aufgenommene Verpackungsschalen 13 mit der Deckfolie 15 zu verschließen. Die Verpackungsmaschine 1 umfasst eine zentrale Maschinensteuerung 17 mit Elektronikkomponenten zum Steuern der Verpackungsmaschine 1. Die Maschinensteuerung kann auch eine Anzeige- und Eingabeeinheit 19, beispielsweise in Form eines Touchscreen-Displays, umfassen mittels der ein Bediener Funktionen der Verpackungsmaschine 1 bedienen kann und dem Benutzer Informationen über den Betriebszustand der Verpackungsmaschine 1 anzeigbar sind.

Die Erfindung ist auch auf Verpackungsmaschinen 1 anderer Art anwendbar. Beispielhaft hierfür ist in Figur 2 eine als Tiefziehverpackungsmaschine ausgebildete Verpackungsmaschine 1 dargestellt. In der Tiefziehverpackungsmaschine werden nicht bereits vorgefertigte Verpackungsschalen 13 in den Produktionsablauf gegeben. Stattdessen ist eine Formstation 21 vorgesehen, die in einer von einer Vorratsrolle 23 abgezogenen Unterfolienbahn 25 durch tiefziehen Verpackungsmulden 27 ausformt. Zum Tiefziehen der Verpackungsmulden 27 umfasst die Formstation 21 ein Formstationsoberteil 21a und ein Formstationsunterteil 21b, die bezüglich einer vertikalen Richtung relativ zueinander beweglich sind, um in der zwischen ihnen verlaufenden Unterfolienbahn 25 Verpackungsmulden 27 auszuformen. Die Unterfolienbahn 25 wird mittels einer nicht dargestellten Transporteinrichtung entlang einer Produktionsrichtung P der Verpackungsmaschine 1 gefördert. Nach Verlassen der Formstation 21 werden die im Verbund vorliegenden Verpackungsmulden 27 in einer Einlegestrecke 7 mit den zu verpackenden Produkten 11 befüllt. Anschließend werden die befüllten Verpackungsmulden 27 einer Siegelstation 9 zugeführt, in welcher die Verpackungsmulden 27, ähnlich zum Verschließen der befüllten Verpackungsschalen 13 in der Schalenverschließmaschine aus Figur 1, durch Ansiegeln einer Deckfolie 15 verschlossen werden. Die Siegelstation 9 umfasst wiederum ein Siegelstationsoberteil 9a und ein Siegelstationsunterteil 9b, die relativ zueinander beweglich sind. Nach dem Verschließen der Verpackungsmulden 27 in der Siegelstation 9 wird der Folienverbund weiter zu einer Schneidstation 29 gefördert, in welcher die einzelnen Verpackungen aus dem Verbund getrennt werden. Auch die Tiefziehverpackungsmaschine umfasst eine Maschinensteuerung 17 zum Steuern einzelner Komponenten der Verpackungsmaschine 1. Wie die Maschinensteuerung 17 der Schalenverschließmaschine aus Figur 1 kann diese eine Anzeige- und Eingabeeinrichtung 19 zur Interaktion mit einem Bediener umfassen.

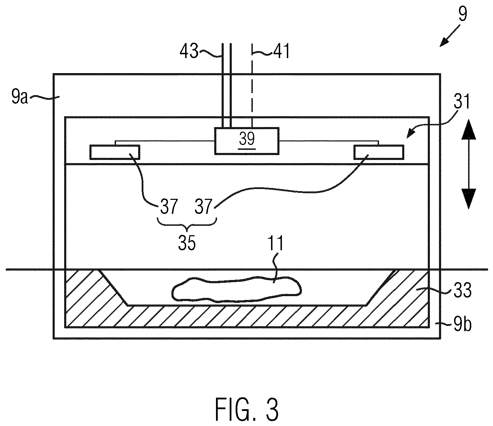

Die Siegelstation 9 der Schalenverschließmaschine beziehungsweise die Siegelstation 9 und die Formstation 21 der Tiefziehverpackungsmaschine sind jeweils Beispiele für Arbeitsstationen, die in dem jeweiligen Verpackungsprozess eine bestimmte Funktion ausführen. Figur 3 zeigt in schematischer Schnittansicht eine solche Arbeitsstation 9 in einer Ausführung als Siegelstation. Die Erfindung könnte aber auch auf eine Formstation 21 als Arbeitsstation angewendet werden. Die Arbeitsstation 9, 21 umfasst, wie erwähnt, ein Arbeitsstationsoberteil 9a, 21a und ein Arbeitsstationsunterteil 9b, 21b, die zum Bearbeiten der Verpackungen entlang einer vertikalen Richtung relativ zueinander beweglich sind. Die Arbeitsstation 9, 21 umfasst zum Bearbeiten der Verpackungen ein beheizbares Werkzeug 31. In der Ausführungsform gemäß Figur 3 ist das Werkzeug 31 in dem Arbeitsstationsoberteil 9a vorgesehen. In dem Arbeitsstationsunterteil 9b ist ein Gegenwerkzeug 33 vorgesehen, welches zur Bearbeitung der Verpackungen mit dem Werkzeug 31 zusammenwirkt. Es wäre aber auch denkbar, dass das beheizbare Werkzeug 31 in dem Arbeitsstationsunterteil 9b vorgesehen ist und das Gegenwerkzeug 33 in dem Arbeitsstationsoberteil 9a vorliegt. In der dargestellten Ausführungsform ist das beheizbare Werkzeug 31 ein Siegelwerkzeug, insbesondere ein Siegelrahmen. Das Gegenwerkzeug kann als Gegendruckelement ausgebildet sein, so dass das beheizbare Siegelwerkzeug und das Gegenwerkzeug zum Ansiegeln der Deckfolie 15 an die befüllten Verpackungen entlang eines Verpackungsrandes zum Bilden einer Siegelnaht zusammenwirken.

Um die Verpackung geeignet bearbeiten zu können, ist das Werkzeug 31 beheizbar. Dazu ist eine Heizeinrichtung 35 in das Werkzeug 31 integriert. In der in Figur 3 dargestellten Variante umfasst die Heizeinrichtung 35 mehrere Heizelemente 37. Diese können insbesondere als elektrische Widerstandsheizelemente oder Induktionsheizelemente ausgebildet sein.

In das Werkzeug 31 ist zudem ein Busknotenmodul 39 integriert, welches in dem in die Arbeitsstation eingebauten Zustand des Werkzeugs 31 über einen Kommunikationsbus 41 der Verpackungsmaschine 1 mit der Maschinensteuerung 17 der Verpackungsmaschine 1 in Kommunikationsverbindung steht. Zudem wird das Busknotenmodul 39 im eingebauten Zustand des Werkzeugs 31 über einen elektrischen Anschluss 43 von der Verpackungsmaschine 1 mit elektrischer Leistung versorgt.

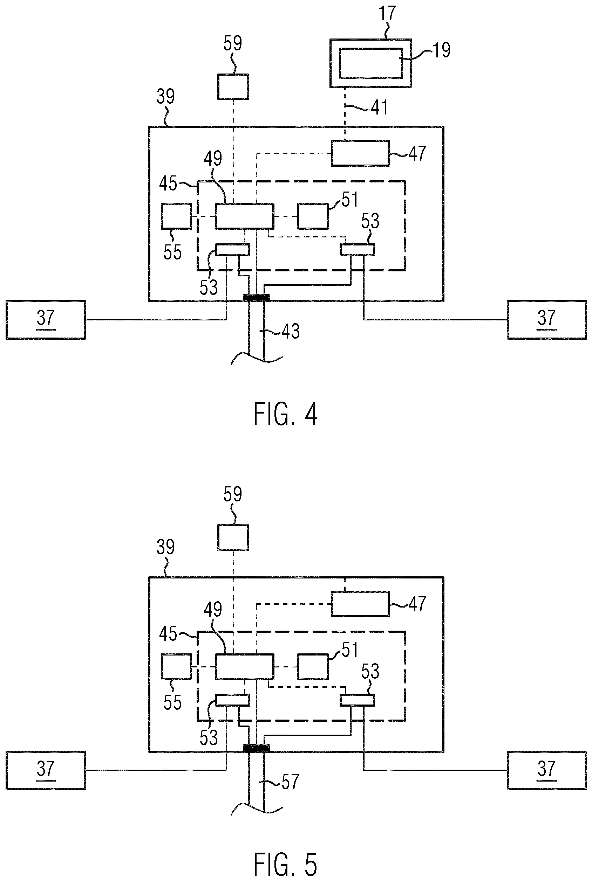

Figur 4 zeigt in einer Darstellung als schematisches Blockschaltbild den Aufbau des in das Werkzeug 31 integrierten Busknotenmoduls 39 sowie dessen Integration in das Gesamtsystem der Verpackungsmaschine 1, beziehungsweise in das Werkzeug 31, in dem in die Arbeitsstation 9, 21 eingebauten Zustand des Werkzeugs 31. Das Busknotenmodul 39 umfasst eine Regelungseinrichtung 45 zum Regeln einer Temperatur des Werkzeugs 31 durch geeignetes Versorgen der Heizeinrichtung 35 mit elektrischer Leistung. Im in die Arbeitsstation 9, 21 eingebauten Zustand des Werkzeugs 31 ist die Regelungseinrichtung 45 über ein Kommunikationsmodul 47 mit dem Kommunikationsbus 41 verbunden und steht damit mit der Maschinensteuerung 17 der Verpackungsmaschine 1 in Kommunikationsverbindung. Die Regelungseinrichtung 45 umfasst eine Recheneinheit 49 sowie einen Speicher 51. Die Recheneinheit 49 ist dazu konfiguriert, Schaltelemente 53, die eine Versorgung der Heizelemente 37 der Heizeinrichtung 35 mit elektrischer Leistung bestimmen, anzusteuern. Die elektrische Leistung zum Betrieb der Heizelemente 37 sowie die elektrische Leistung zum Betrieb der Regelungseinrichtung 45 wird über den elektrischen Anschluss 43 von der Verpackungsmaschine 1 bereitgestellt. Es ist zudem wenigstens ein Temperatursensor 55 zur Messung einer Temperatur des Werkzeugs 31 in dem Werkzeug 31 integriert. In der dargestellten Variante ist der Temperatursensor 55 ebenfalls in dem Busknotenmodul 39 vorgesehen. Es wäre aber auch denkbar, den Temperatursensor 55 an anderer Stelle in dem Werkzeug 31 zu integrieren. Messwerte des Temperatursensors 55 werden der Regelungseinrichtung 45 zur Verfügung gestellt.

Beim Einbau des Werkzeugs 31 in die Arbeitsstation 9, 21, beziehungsweise bei Inbetriebnahme der Arbeitsstation 9, 21 mit eingebautem Werkzeug 31, wird die Regelungseinrichtung 45 von der Maschinensteuerung 17 der Verpackungsmaschine 1 in einen Verpackungsbetriebsmodus versetzt, sofern sie sich noch nicht in dem Verpackungsbetriebsmodus befindet. In dem Verpackungsbetriebsmodus regelt die Regelungseinrichtung 45 durch geeignetes Versorgen der Heizeinrichtung 35 (durch geeignetes Ansteuern der Schaltelemente 53) mit elektrischer Leistung eine Temperatur des Werkzeugs 31 anhand einer Betriebstemperatur-Sollvorgabe. So wird gewährleistet, dass die Temperatur des Werkzeugs 31 in einem für die Bearbeitung der Verpackungen geeigneten Bereich gehalten wird. Die Betriebstemperatur-Sollvorgabe kann einen Temperatur-Sollwert oder einen Temperatur-Sollbereich angeben. Vorzugsweise wird die Betriebstemperatur-Sollvorgabe der Regelungseinrichtung 45 über den Kommunikationsbus 41 von der Maschinensteuerung 17 der Verpackungsmaschine 1 übermittelt. Die Betriebstemperatur-Sollvorgabe kann von der Maschinensteuerung 17 automatisch anhand von hinterlegten Werten und/oder Betriebsparametern der Verpackungsmaschine 1 bestimmt werden oder durch eine Benutzereingabe eingestellt werden. Die Betriebstemperatur-Sollvorgabe kann zumindest zeitweise in dem Speicher 51 der Regelungseinrichtung 45 abgelegt werden.

Um bei einem Hochfahren der Verpackungsmaschine oder bei einer Wiederaufnahme des Verpackungsbetriebs nach einem Wechsel des Werkzeugs 31 (beispielsweise aufgrund eines Formatwechsels) durch das anfängliche Aufheizen des Werkzeugs 31 verursachte Verzögerungen möglichst zu vermeiden oder zu reduzieren, wird erfindungsgemäß das Werkzeug 31 bereits außerhalb der Arbeitsstation 9, 21 vorgeheizt. Hierzu wird das Werkzeug 31 im aus der Arbeitsstation 9, 21 ausgebauten Zustand an eine externe Stromversorgung 57 angeschlossen.

Figur 5 zeigt in einer Darstellung als schematisches Blockschaltbild das Werkzeug 31 im aus der Arbeitsstation ausgebauten und an die externe Stromversorgung 57 angeschlossenen Zustand. Die externe Stromversorgung 57 stellt elektrische Heizleistung zur Versorgung der Heizeinrichtung 35 in dem Werkzeug 31 und eine Versorgungsspannung für die Regelungseinrichtung 45 bereit. Es werden von der externen Stromversorgung 57 jedoch keine Regelungs- oder Steuersignale zur Verfügung gestellt. Die externe Stromversorgung kann beispielsweise ein mit dem Werkzeug 31 und mit einer Steckdose verbindbares Stromkabel mit oder ohne Netzteil umfassen.

Die Regelung der Temperatur des Werkzeugs 31 beim Vorheizen erfolgt ebenfalls durch die in das Werkzeug 31 integrierte Regelungseinrichtung 45. Vorzugsweise wird die Regelungseinrichtung 45 vor dem Ausbauen des Werkzeugs 31 aus der Arbeitsstation 9, 21 von der Maschinensteuerung 17 der Verpackungsmaschine 1 in einen Vorheizmodus versetzt oder befindet sich nach Wegfall der Verbindung mit der Maschinensteuerung 17 über den Kommunikationsbus 41 in dem Vorheizmodus. Die Regelungseinrichtung 45 kann sich auch ab Werk in dem Vorheizmodus befinden. Wenn das Werkzeug 31 mit der in dem Vorheizmodus befindlichen Regelungseinrichtung 45, bzw. ohne aktiver Kommunikationsverbindung mit der Maschinensteuerung 17, an die externe Stromversorgung 57 angeschlossen wird, erkennt die Regelungseinrichtung 45, dass sie sich in dem Vorheizmodus befindet und regelt die Temperatur des Werkzeugs 31 durch geeignetes Versorgen der Heizeinrichtung 35 mit von der externen Stromversorgung 57 bereitgestellter elektrischer Leistung anhand einer Vorheiztemperatur-Sollvorgabe. Die Vorheiztemperatur-Sollvorgabe kann in dem Speicher 51 der Regelungseinrichtung 45 abgelegt sein. Insbesondere kann die Vorheiztemperatur-Sollvorgabe in dem Speicher 51 als voreingestellte Vorgabe vorliegen. Es ist aber auch denkbar, dass die Vorheiztemperatur-Sollvorgabe der Regelungseinrichtung 45 zuvor im in die Arbeitsstation 9, 21 eingebauten Zustand des Werkzeugs 31 von der Maschinensteuerung 17 der Verpackungsmaschine 1 übermittelt und in dem Speicher 51 abgelegt wurde. Die Vorheiztemperatur-Sollvorgabe könnte von der Maschinensteuerung 17 der Verpackungsmaschine 1 basierend auf eingespeicherten Angaben und/oder einem Betriebszustand der Verpackungsmaschine 1 automatisch bestimmt oder anhand von Benutzereingaben bestimmt werden.

Vorzugsweise umfasst das Werkzeug 31 eine Signaleinrichtung 59, die von der Regelungseinrichtung 45 zur Ausgabe eines Signals gesteuert wird, welches eine Beendigung des Vorheizvorgangs anzeigt. Die Signaleinrichtung 59 könnte beispielsweise eine LED sein, die während des Vorheizvorgangs blinkt und nach Abschließen des Vorheizvorgangs durchgängig leuchtet.

Nach Beendigung des Vorheizvorgangs wird das Werkzeug 31 von der externen Stromversorgung 57 getrennt und in die Arbeitsstation 9, 21 eingebaut. Hierbei wird das Werkzeug 31 über Verbinden geeigneter Steckeinrichtungen mit der Stromversorgung 43 und dem Kommunikationsbus 41 der Verpackungsmaschine 1 verbunden. Die Maschinensteuerung 17 der Verpackungsmaschine 1 versetzt über den Kommunikationsbus 41 die Regelungseinrichtung 45 dann wieder aus dem Vorheizmodus in den Verpackungsbetriebsmodus, in dem die Temperatur des Werkzeugs 31 anhand der Betriebstemperatur-Sollvorgabe geregelt wird.

Dadurch, dass das Werkzeug 31 vor dem Einbau in die Arbeitsstation 9, 21 bereits vorgeheizt wurde, lässt sich der Betrieb der Verpackungsmaschine 1 idealerweise direkt nach dem Einbau des Werkzeugs 31 aufnehmen.

## Patentansprüche

1. Verfahren zum Betreiben einer Verpackungsmaschine (1), welche eine Arbeitsstation (9, 21) mit einem auswechselbaren Werkzeug (31) umfasst, wobei
eine in das Werkzeug (31) integrierte Regelungseinrichtung (45) in einem in die Arbeitsstation (9, 21) eingebauten Zustand des Werkzeugs (31) durch geeignetes Versorgen einer in das Werkzeug (31) integrierten Heizeinrichtung (35) mit elektrischer Leistung eine Temperatur des Werkzeugs (31) anhand einer Betriebstemperatur-Sollvorgabe regelt, und
wobei das Werkzeug (31) in einem aus der Arbeitsstation (9, 21) ausgebauten Zustand an eine externe Stromversorgung (57) angeschlossen wird und die Regelungseinrichtung (45) durch geeignetes Versorgen der Heizeinrichtung (35) mit von der externen Stromversorgung (57) bereitgestellter elektrischer Leistung die Temperatur des Werkzeugs (31) anhand einer Vorheiztemperatur-Sollvorgabe regelt.

2. Verfahren nach Anspruch 1, wobei die externe Stromversorgung (57) dem Werkzeug (31) zwar elektrische Heizleistung, nicht aber Steuer- oder Regelungssignale zur Verfügung stellt.

3. Verfahren nach Anspruch 1 oder 2, wobei die Vorheiztemperatur-Sollvorgabe der Regelungseinrichtung (45) von einer Maschinensteuerung (17) der Verpackungsmaschine (1) vorgegeben wird, insbesondere vor einem Ausbau des Werkzeugs (31) aus der Arbeitsstation (9, 21).

4. Verfahren nach Anspruch 1 oder 2, wobei die Vorheiztemperatur-Sollvorgabe der Regelungseinrichtung (45) als voreingestellte Vorgabe vorliegt.

5. Verfahren nach einem der vorangehenden Ansprüche, wobei die Regelungseinrichtung (45) einen Speicher (51) umfasst und die Vorheiztemperatur-Sollvorgabe in dem Speicher (51) hinterlegt wird.

6. Verfahren nach einem der vorangehenden Ansprüche, wobei die Regelungseinrichtung (45) vor einem Ausbau des Werkzeugs (31) aus der Arbeitsstation (9, 21) von einer Maschinensteuerung (17) der Verpackungsmaschine (1) in einen Vorheizmodus versetzt wird und wobei die Regelungseinrichtung (45) nach dem Anschließen an die externe Stromversorgung (57) erkennt, dass es sich in dem Vorheizmodus befindet, und mit dem Regeln der Temperatur des Werkzeugs (31) anhand der Vorheiztemperatur-Sollvorgabe beginnt.

7. Verfahren nach einem der vorangehenden Ansprüche, wobei die Regelungseinrichtung (45) nach dem Anschließen an die externe Stromversorgung (57) erkennt, dass keine Kommunikationsverbindung mit einer Maschinensteuerung (17) der Verpackungsmaschine (1) vorliegt, und dann mit dem Regeln der Temperatur des Werkzeugs (31) anhand der Vorheiztemperatur-Sollvorgabe beginnt.

8. Verfahren nach einem der vorangehenden Ansprüche, wobei die Betriebstemperatur-Sollvorgabe der Regelungseinrichtung (45) von einer Maschinensteuerung (17) der Verpackungsmaschine (1) vorgegeben wird.

9. Verfahren nach einem der vorangehenden Ansprüche, wobei die Regelungseinrichtung (45) in dem in die Arbeitsstation (9, 21) eingebauten Zustand des Werkzeugs (31) mit einer Maschinensteuerung (17) der Verpackungsmaschine (1) in Kommunikationsverbindung steht, insbesondere über ein Kommunikationsbus-System.

10. Verfahren nach einem der vorangehenden Ansprüche, wobei die Arbeitsstation (9, 21) eine Siegelstation (9) ist und das Werkzeug (31) ein beheizbares Siegelwerkzeug zum siegelnden Verschließen einer befüllten Verpackung durch Ansiegeln einer Deckfolie (15) ist.

11. Verfahren nach einem der Ansprüche 1 bis 9, wobei die Arbeitsstation (9, 21) eine Formstation (21) ist und das Werkzeug (31) ein beheizbares Formwerkzeug zum Ausbilden von Verpackungsmulden (27) in einer Unterfolienbahn (15) durch Tiefziehen ist.

12. Verfahren nach einem der vorangehenden Ansprüche, wobei es sich bei der Verpackungsmaschine (1) um eine Tiefziehverpackungsmaschine oder eine Schalenverschließmaschine handelt.

13. Verfahren nach einem der vorangehenden Ansprüche, wobei zudem ein Temperatursensor (55) in das Werkzeug (31) integriert ist und die Regelungseinrichtung (45) für das Regeln der Temperatur des Werkzeugs (31) auf einen von dem Temperatursensor (55) bereitgestellten Messwert zurückgreift.

14. Verfahren nach Anspruch 13, wobei der Temperatursensor (55) und die Regelungseinrichtung (45) als ein gemeinsames Modul (39) in das Werkzeug (31) integriert sind.

## Claims

1. A method for operating a packaging machine (1) comprising a work station (9, 21) with an exchangeable tool (31), wherein
a control device (45) integrated into said tool (31) in a state of said tool (31) installed into said work station (9, 21) regulates a temperature of said tool (31) based on an operating temperature target specification by suitably supplying a heating device (35) integrated into said tool (31) with electrical power, and
wherein said tool (31) in a state removed from said work station (9, 21) is connected to an external power supply (57) and said control device (45) regulates the temperature of said tool (31) based on a preheating temperature target specification by suitably supplying said heating device (35) with electrical power provided by said external power supply (57).

2. The method according to claim 1, wherein said external power supply (57) provides said tool with electrical heating power, but no control or regulating signals.

3. The method according to claim 1 or 2, wherein the preheating temperature target specification of said control device (45) is specified by a machine control device (17) of said packaging machine (1), in particular prior to the removal of said tool (31) from said work station (9, 21).

4. The method according to claim 1 or 2, wherein the preheating temperature target specification of said control device (45) is available as a preset specification.

5. The method according to any one of the preceding claims, wherein said control device (45) comprises a memory (51) and the preheating temperature target specification is stored in said memory (51).

6. The method according to any one of the preceding claims, wherein said control device (45) is put in a preheating mode by a machine control device (17) of said packaging machine (1) prior to the removal of said tool (31) from said work station (9, 21) and wherein said control device (45), after connecting to said external power supply (57), detects that it is in the preheating mode and starts regulating the temperature of said tool (31) based on the preheating temperature target specification.

7. The method according to any one of the preceding claims, wherein said control device (45), after connecting to said external power supply (57), detects that there is no communication connection to a machine control device (17) of said packaging machine (1), and then starts regulating the temperature of said tool (31) based on the preheating temperature target specification.

8. The method according to any one of the preceding claims, wherein the operating temperature target specification of said control device (45) is specified by a machine control device (17) of said packaging machine (1).

9. The method according to any one of the preceding claims, wherein said control device (45) in the state of said tool (31) installed into said work station (9, 21) is in communication connection with a machine control device (17) of said packaging machine (1), in particular via a communication bus system.

10. The method according to any one of the preceding claims, wherein said work station (9, 21) is a sealing station (9) and said tool (31) is a heatable sealing tool for sealing a filled packaging by sealing on a top film (15).

11. The method according to any one of the claims 1 to 9, wherein said work station (9, 21) is a forming station (21) and said tool (31) is a heatable forming tool for forming packaging trays (27) into a lower film web (15) by thermoforming.

12. The method according to any one of the preceding claims, wherein said packaging machine (1) is a thermoforming packaging machine or a tray sealer.

13. The method according to any one of the preceding claims, wherein a temperature sensor (55) is additionally integrated into said tool (31), and said control device (45) uses a measured value provided by said temperature sensor (55) for regulating the temperature of said tool (31).

14. The method according to claim 13, wherein said temperature sensor (55) and said control device (45) are integrated into said tool (31) as a joint module (39).

## Revendications

1. Procédé d'exploitation d'une machine d'emballage (1) comprenant un poste de travail (9, 21) avec un outil interchangeable (31), dans lequel
un dispositif de régulation (45) intégré à l'outil (31), dans un état où l'outil (31) est installé dans le poste de travail (9, 21), régule une température de l'outil (31) sur la base d'une consigne de température de service grâce à une alimentation électrique adaptée d'un dispositif de chauffage (35) intégré à l'outil (31), et
l'outil (31), dans un état où il est désinstallé du poste de travail (9, 21), est connecté à une alimentation électrique externe (57), et le dispositif de régulation (45) régule la température de l'outil (31) sur la base d'une consigne de température de préchauffage par une alimentation adaptée du dispositif de chauffage (35) avec de l'énergie électrique fournie par l'alimentation externe (57).

2. Procédé selon la revendication 1, dans lequel l'alimentation externe (57) fournit à l'outil (31) une alimentation électrique de chauffe mais pas de signaux de commande ou de régulation.

3. Procédé selon la revendication 1 ou 2, dans lequel la consigne de température de préchauffage du dispositif de régulation (45) est spécifiée par un contrôleur de machine (17) de la machine d'emballage (1), en particulier avant de désinstaller l'outil (31) du poste de travail (9, 21).

4. Procédé selon la revendication 1 ou 2, dans lequel la consigne de température de préchauffage du dispositif de régulation (45) consiste en une consigne prédéfinie.

5. Procédé selon l'une des revendications précédentes, dans lequel le dispositif de régulation (45) comprend une mémoire (51) et la consigne de température de préchauffage est stockée dans la mémoire (51).

6. Procédé selon l'une des revendications précédentes, dans lequel le dispositif de régulation (45) est commuté dans un mode de préchauffage par un contrôleur de machine (17) de la machine d'emballage (1) avant que l'outil (31) ne soit désinstallé du poste de travail (9, 21), et dans lequel le dispositif de régulation (45) reconnaît qu'il est en mode de préchauffage après avoir été connecté à l'alimentation électrique externe (57) et commence à réguler la température de l'outil (31) sur la base de la consigne de température de préchauffage.

7. Procédé selon l'une des revendications précédentes, dans lequel, après la connexion à l'alimentation électrique externe (57), le dispositif de régulation (45) reconnaît qu'il n'y a pas de connexion de communication avec un contrôleur de machine (17) de la machine d'emballage (1), puis commence à réguler la température de l'outil (31) sur la base de la consigne de température de préchauffage.

8. Procédé selon l'une des revendications précédentes, dans lequel la consigne de température de service du dispositif de régulation (45) est spécifiée par un contrôleur de machine (17) de la machine d'emballage (1).

9. Procédé selon l'une des revendications précédentes, dans lequel, dans l'état où l'outil (31) est installé dans le poste de travail (9, 21), le dispositif de régulation (45) est en connexion de communication avec un contrôleur de machine (17) de la machine d'emballage (1), en particulier via un système de bus de communication.

10. Procédé selon l'une des revendications précédentes, dans lequel le poste de travail (9, 21) est un poste de scellage (9) et l'outil (31) est un outil de scellage chauffable destiné à sceller un emballage rempli en scellant une feuille de recouvrement (15).

11. Procédé selon l'une des revendications 1 à 9, dans lequel le poste de travail (9, 21) est un poste de formage (21) et l'outil (31) est un outil de formage chauffable destiné à former des barquettes d'emballage (27) dans une bande de feuille inférieure (15) par emboutissage.

12. Procédé selon l'une des revendications précédentes, dans lequel la machine d'emballage (1) est une thermoformeuse d'emballage ou une machine de scellage de coques.

13. Procédé selon l'une des revendications précédentes, dans lequel un capteur de température (55) est en outre intégré dans l'outil (31) et le dispositif de régulation (45) destiné à réguler la température de l'outil (31) utilise une valeur de mesure fournie par le capteur de température (55) .

14. Procédé selon la revendication 13, dans lequel le capteur de température (55) et le dispositif de régulation (45) sont intégrés dans l'outil (31) sous forme d'un module commun (39).
